# EUROPEAN PATENT APPLICATION

(11) **EP 4 570 381 A1**
(43) Date of publication of application: **18.06.2025**
(21) Application number: 24826069.7
(22) Date of filing: 12.03.2024
(51) Int. Cl.: B02C 23/02, H01M 4/36, H01M 4/04, B02C 17/16, B02C 17/14, H01M 4/02

(54) **ACTIVE MATERIAL INPUT DEVICE**

(30) Priority: 20.06.2023 KR 20230079222; 22.02.2024 KR 20240025952
(71) Applicant: LG Energy Solution, Ltd., Seoul 07335 (KR)
(72) Inventor: JANG, Ji-Woong, Daejeon 34122 (KR); PARK, Seung-Seo, Daejeon 34122 (KR); KIM, Min-Ju, Daejeon 34122 (KR); KIM, Jin-Tae, Daejeon 34122 (KR); AHN, Byoung-Hoon, Daejeon 34122 (KR); HWANG, Yu-Jin, Daejeon 34122 (KR)
(74) Representative: Goddar, Heinz J.
(86) International application number: PCT/KR2024/003139
(87) International publication number: WO 2024/262744

(57) **Abstract**

An active material feeding device according to an embodiment of the present disclosure includes a hopper configured to accommodate and transfer an active material, a filter plate disposed inside of the hopper and having at least one through-hole, and a vibrator disposed on at least part of the filter plate and configured to vibrate the filter plate.

## Description

### TECHNICAL FIELD

The present disclosure relates to an active material feeding device.

The present application claims priority to Korean Patent Application No. 10-2023-0079222 filed on June 20, 2023 and Korean Patent Application No. 10-2024-0025952 filed on February 22, 2024 in the Republic of Korea, the disclosures of which are incorporated herein by reference.

### BACKGROUND

As secondary batteries can be easily applied to various types of products and have electrical properties such as high energy density, they are not only commonly used in portable devices but also universally applied to electric vehicles (EVs) or hybrid electric vehicles (HEVs) and electric scooters that are driven by an electrical driving source. Secondary batteries can remarkably reduce the use of fossil fuels. In addition to the primary advantage, another advantage is that they do not generate by-products from the use of energy. Due to these advantages, secondary batteries are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries and so on. A unit secondary battery cell, i.e., a unit battery cell has an operating voltage of about 2.5V to 4.5V. Accordingly, when higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells in the battery pack may be variously set depending on the required output voltage or charge/discharge capacity.

Meanwhile, in the manufacture of secondary batteries, conventionally, when feeding single-crystal positive electrode active materials, blockage at meshes and delays in feeding occurred due to arching and bridging of the single-crystal active materials in feed hoppers. More specifically, it was necessary to deagglomerate active material agglomerates by human hand or feed the active materials using an air gun.

### SUMMARY

### Technical Problem

An object of the present disclosure is to prevent active material agglomeration when feeding the active material.

Another object of the present disclosure is to prevent delays in active material feeding.

The technical problems of the present disclosure to be solved are not limited to the aforementioned problems, and these and other problems will be clearly understood by those skilled in the art from the following description.

### Technical Solution

To solve the above-described problem, an active material feeding device according to an embodiment of the present disclosure includes a hopper configured to accommodate and transfer an active material; a filter plate disposed inside of the hopper and having at least one through-hole; and a vibrator disposed on at least part of the filter plate and configured to vibrate the filter plate.

In an aspect of the present disclosure, the hopper may have an inclined surface and decrease in width downwards.

In another aspect of the present disclosure, a cross section of the hopper may be circular in shape.

In another aspect of the present disclosure, the through-hole may be a perforated hole.

Preferably, the through-hole may include a plurality of through-holes.

In an aspect of the present disclosure, the through-hole may be circular or quadrilateral in shape.

In another aspect of the present disclosure, the filter plate may extend in a direction perpendicular to a depth direction of the hopper.

In another aspect of the present disclosure, the filter plate may be located at a 1/2 point of a total depth of the hopper.

In an aspect of the present disclosure, the active material feeding device may include a plate holder to fix the filter plate at a predetermined location.

Here, the plate holder may include an upper holder disposed on the filter plate and coupled to the hopper; and a lower holder disposed below the filter plate and coupled to the hopper.

Preferably, the filter plate may be fixed between the upper holder and the lower holder.

In another aspect of the present disclosure, the upper holder and the lower holder may have an O-ring groove that is recessed inward at an edge, and an O-ring having elasticity may be inserted into the O-ring groove.

In an aspect of the present disclosure, the vibrator may be disposed at a central area of the filter plate.

In another aspect of the present disclosure, the vibrator may be coupled to the filter plate by welding.

In another aspect of the present disclosure, the vibrator may be configured to rotate a rotary turbine gear in the vibrator by using compressed air.

### Advantageous Effects

By the present disclosure, it may be possible to prevent active material agglomeration when feeding the active material.

In another aspect, by the present disclosure, it may be possible to prevent delays in active material feeding.

In particular, by the present disclosure, it may be possible to reduce the time taken to feed the single-crystal positive electrode active material by 30% or more.

However, the effects that can be obtained through the present disclosure are not limited to the aforementioned effects, and these and other effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus, the present disclosure should not be construed as being limited to the drawings.
FIG. 1 is a diagram illustrating an active material feeding device according to an embodiment of the present disclosure.
FIG. 2 is an exploded perspective view of FIG. 1.
FIG. 3 is a diagram illustrating a filter plate according to an embodiment of the present disclosure.
FIG. 4 is a diagram illustrating a filter plate according to another embodiment of the present disclosure.
FIG. 5 is a diagram illustrating a filter plate according to still another embodiment of the present disclosure.
FIG. 6 is a front view of an active material feeding device according to an embodiment of the present disclosure.
FIG. 7 is an enlarged partial view of the active material feeding device of FIG. 6.
FIG. 8 is a diagram illustrating a vibrator disposed on a filter plate according to an embodiment of the present disclosure.
FIG. 9 is a diagram illustrating a vibrator disposed on a filter plate according to another embodiment of the present disclosure.
FIG. 10 is a diagram illustrating a vibrator according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to the technical aspect of the present disclosure on the basis of the principle that the inventor is allowed to define terms appropriately for the best explanation. Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

Additionally, in order to help the understanding of the present disclosure, the accompanying drawings are not drawn to scale, and the dimensions of some elements may be exaggerated. Also, the same reference numerals may be affixed to the same elements in different embodiments.

The term "same" may signify "substantially the same". Accordingly, "substantially the same" may include the same but having differences of, for example, 5% or less that is regarded as a low level in the corresponding technical field. Additionally, when a parameter is referred to as being uniform in a certain area, it may represent that the parameter is uniform in the ordinary sense.

The terms "first", "second" and the like, are used to describe different elements, but these elements are not limited by the terms. The terms are used to distinguish one element from another, and unless otherwise stated, a first element may be a second element.

Throughout the specification, unless otherwise stated, each element may be singular or plural.

It should be understood that when an element is referred to as being "on (or below)", it can be present on an upper surface (or a lower surface), or intervening elements may be present between the element and other element disposed on (or below) the element.

It should be further understood that when an element is referred to as being "connected to" or "coupled to" another element, it can be directly connected to the other element but each element may be "connected to" or "coupled to" each other through another element or intervening elements may be present.

In the specification, "A and/or B" refers to either A or B or both unless otherwise stated, and "C to D" refers to C or more and D or less unless otherwise stated.

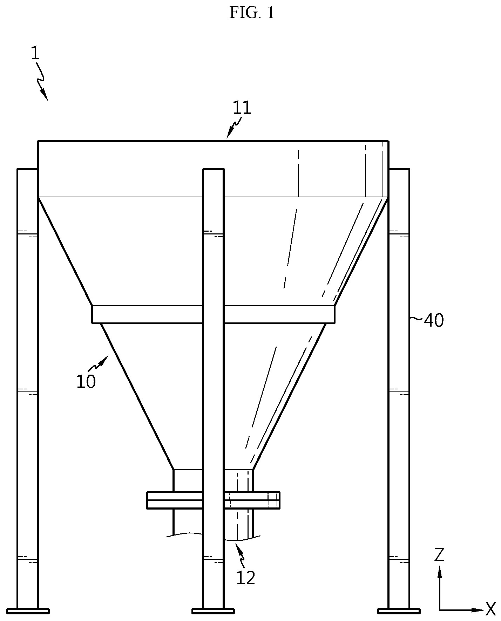

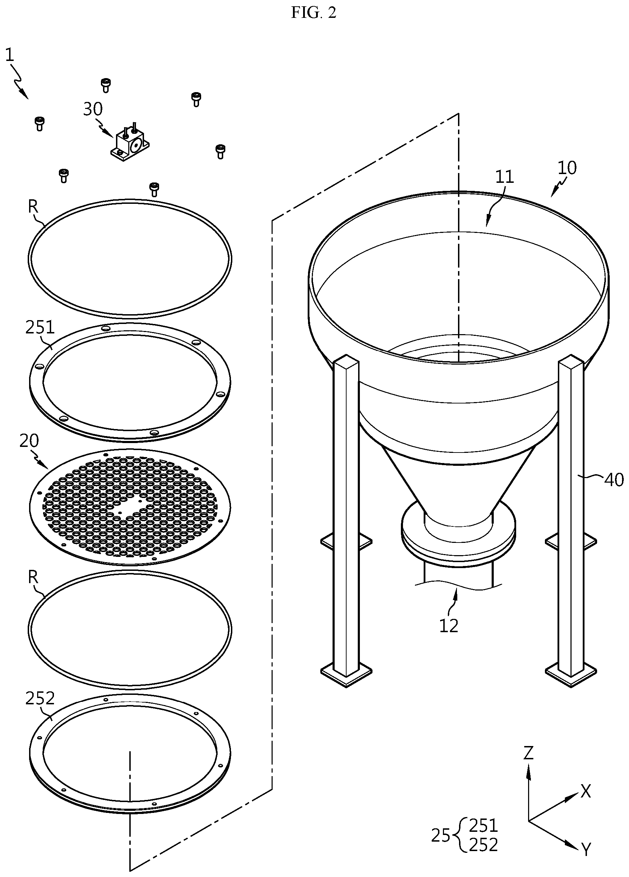

FIG. 1 is a diagram illustrating an active material feeding device 1 according to an embodiment of the present disclosure, and FIG. 2 is an exploded perspective view of FIG. 1.

Referring to FIGs. 1 and 2, the active material feeding device 1 includes a hopper 10, a filter plate 20 and a vibrator 30. The active material feeding device 1 may further include a support 40. The active material feeding device 1 may be used to feed a single-crystal positive electrode active material.

More specifically, the hopper 10 may be configured to accommodate and transfer the active material. For example, the hopper 10 may be configured to accommodate and transfer the single-crystal positive electrode active material. The filter plate 20 may be disposed inside of the hopper 10 and have at least one through-hole H. That is, the filter plate may act as a screen mesh to filter the active material loaded from the hopper 10. The size of the through-hole H of the filter plate 20 may be larger than the particle size of the active material. That is, agglomerated active material particles cannot pass through the through-hole H and only non-agglomerated active material particles may pass through the through-hole H of the filter plate 20. The vibrator 30 may be disposed on at least part of the filter plate 20 and configured to vibrate the filter plate 20. That is, as the vibrator 30 is mounted on the filter plate 20 to vibrate the filter plate 20, the active material stuck on the filter plate 20 may vibrate together. Accordingly, it may be possible to break active material agglomerates.

By this structure of the present disclosure, it may be possible to prevent agglomeration of the active material fed into the hopper 10. Furthermore, it may be possible to break down active material agglomerates into active material particles by the vibration of the vibrator 30. That is, by the present disclosure, it may be possible to prevent active material arching and bridging. Accordingly, it may be easy for the active material particles to pass through the filter plate 20. Accordingly, by the present disclosure, it may be possible to prevent blockage at the through-hole H of the filter plate 20. Additionally, it may be possible to eliminate the need to manually break active material agglomerates through human hands or air guns, thereby preventing delays in active material feeding.

Referring back to FIGs. 1 and 2, the hopper 10 may have an inclined surface and its width may decrease downwards.

For example, the hopper 10 may have an approximately conic shape with the apex pointing down. In this instance, the hopper 10 may have a circular cross section. In this case, as the hopper 10 is circular in cross section, there may be a lower likelihood that the active material gathers and agglomerates at the corner than an angled cross section. However, the embodiment of the present disclosure is not limited thereto, and any shape of the hopper 10 having the inclined surface and the width decreasing downwards may be included in the scope of the present disclosure. For example, triangular, quadrilateral, pentagonal and hexagonal pyramid shapes may be included in the scope of the present disclosure.

In another aspect, the hopper 10 may include an inlet 11 through which the active material enters and an outlet 12 through which the active material exits. For example, referring to FIGs. 1 and 2, the inlet 11 may be disposed at a location of the largest diameter of the hopper 10. That is, the inlet 11 may be located at the topmost of the hopper 10. The hopper 10 may decrease in diameter downwards. In this instance, the outlet 12 may be disposed at a location of the smallest diameter of the hopper 10. That is, the outlet 12 may be located at the bottommost of the hopper 10.

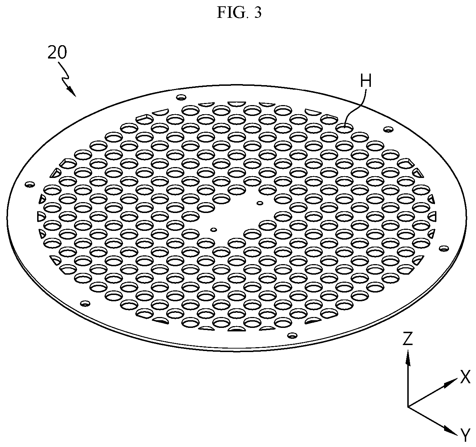

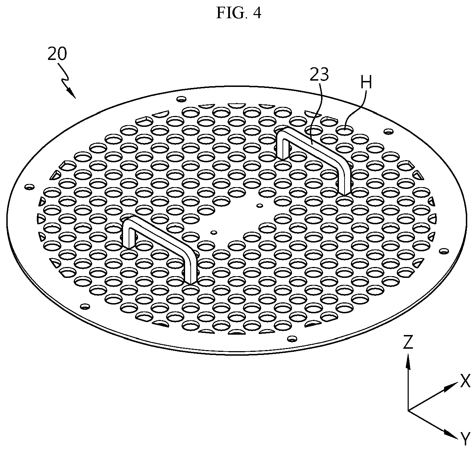

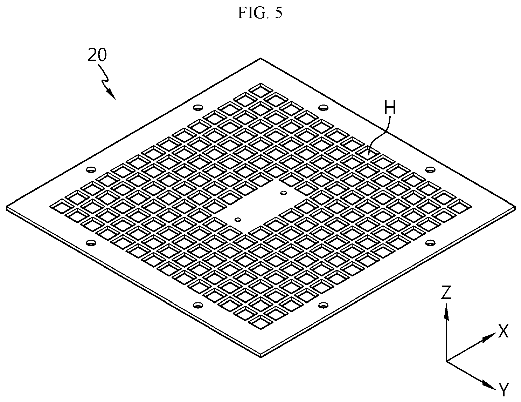

FIG. 3 is a diagram illustrating the filter plate 20 according to an embodiment of the present disclosure, and FIG. 4 is a diagram illustrating the filter plate 20 according to another embodiment of the present disclosure. FIG. 5 is a diagram illustrating the filter plate 20 according to still another embodiment of the present disclosure.

In an aspect of the present disclosure, the filter plate 20 may have at least one through-hole H. The through-hole H is a hole that passes through the filter plate and is not limited to a particular shape. That is, the through-hole H refers to a hole in the filter plate 20.

Preferably, the through-hole H may be a perforated hole. That is, the through-hole H of the filter plate 20 may be a hole formed by punching.

For example, conventionally, the filter plate 20 was of a wire type. For example, the filter plate 20 was a mesh formed by weaving wires on the horizontal axis and wires on the vertical axis. However, when the wire-type filter plate 20 is applied, friction may occur between dissimilar wire metals by the vibration of the vibrator 30. There is a risk of abrasion between dissimilar metals by the friction. In contrast, the filter plate 20 of the present disclosure is of a perforated-type, not a wire-type, to avoid friction between dissimilar metals when vibration occurs. Accordingly, it may be possible to prevent a risk of abrasion between dissimilar metals by the friction.

In another aspect of the present disclosure, the through-hole H may include a plurality of through-holes.

For example, referring to FIGs. 3 to 5, the through-hole H may include a plurality of through-holes in the filter plate 20. More specifically, the through-hole H may include a plurality of through-holes in a regular arrangement in the filter plate 20. In this instance, the through-hole H may be circular or quadrilateral in shape. In an example, when the through-hole H is quadrilateral in shape, the length of one side of the through-hole H may be set to about 20 mm. In this instance, the width of an area between the through-holes H may be set to about 2 mm. Alternatively, the through-hole H may be hexagonal in shape. The through-hole H is not limited to a particular shape, and the shape of the through-hole H of the present disclosure may include any shape that may be formed by punching.

In another aspect of the present disclosure, the filter plate 20 may include at least one handle 23.

For example, referring to FIG. 4, the handle 23 protruding upward may be disposed on the filter plate 20. In the embodiment of FIG. 4, the handle 23 may be disposed at symmetrical locations with respect to an imaginary line passing through the center of the filter plate 20.

By this configuration of the present disclosure, it may be possible to allow an operator to manually vibrate the handle 23 to generate additional vibration to the filter plate 20 or make it easy to detach the filter plate 20 through the handle 23.

In another aspect of the present disclosure, the filter plate 20 may have an approximately circular plate shape. For example, referring to FIGs. 3 and 4, the filter plate 20 may have an approximately circular plate shape. In this case, the hopper 10 may have an approximately conic shape with the apex pointing down so that the cross section of the hopper 10 on which the filter plate 20 is mounted may be approximately circular in shape.

Meanwhile, as another embodiment, referring to FIG. 5, the filter plate 20 may have an approximately quadrilateral plate shape. In this case, the hopper 10 may have an approximately quadrilateral pyramid shape with the apex pointing down so that the cross section of the hopper 10 on which the filter plate 20 is mounted may be approximately quadrilateral in shape. However, the shape of the filter plate 20 is not limited thereto, and plate shapes having various shapes may be included in the scope of the filter plate 20 of the present disclosure.

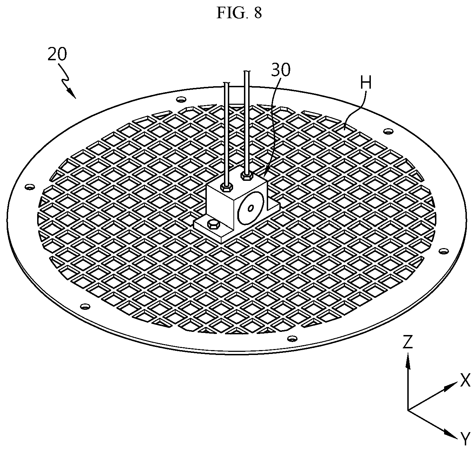

Furthermore, the shape of the filter plate 20 and the shape of the through-hole H do not always match each other. For example, as shown in FIG. 3, the filter plate 20 may be circular in shape and the through-hole H may be circular in shape, and as shown in FIG. 5, the filter plate 20 may be quadrilateral in shape and the through-hole H may be quadrilateral in shape. Additionally, as shown in FIG. 8, the filter plate 20 may be circular in shape and the through-hole H may be quadrilateral in shape. That is, the shape of the filter plate 20 and the shape of the through-hole H may be variously combined without affecting each other.

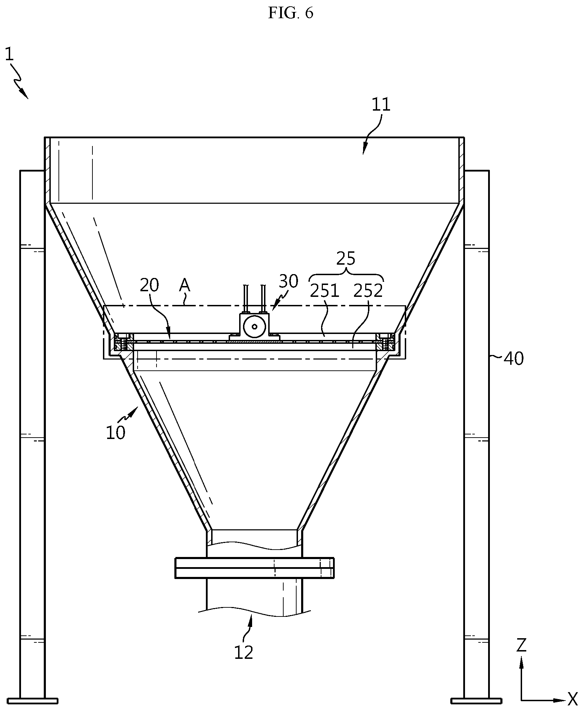

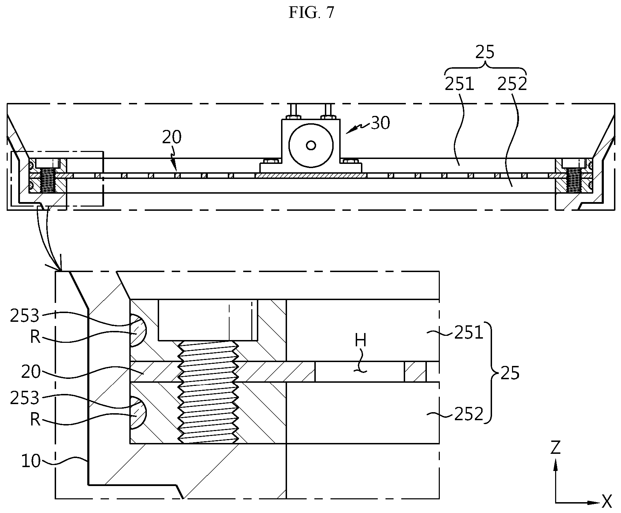

FIG. 6 is a front view of the active material feeding device 1 according to an embodiment of the present disclosure, and FIG. 7 is an enlarged partial view of the active material feeding device 1 of FIG. 6.

Referring to FIGs. 6 and 7, the filter plate 20 may extend in a direction perpendicular to the depth direction of the hopper 10. That is, the hopper 10 may have an approximately conic shape extending in the vertical direction, and in this instance, the depth direction may be parallel to the vertical direction. Here, the filter plate 20 may extend in the direction perpendicular to the depth direction of the hopper 10, i.e., the horizontal direction. When considering that the active material feeding device 1 is generally installed on the ground, the filter plate 20 may extend in a direction parallel to the ground.

By this structure, the active material may be uniformly distributed over the entire area of the filter plate 20. Accordingly, the active material may be discharged downward smoothly and efficiently through the plurality of through-holes H in the filter plate 20. Accordingly, by the above-described structure, it may be possible to prevent bottlenecks.

In another aspect of the present disclosure, the filter plate 20 may be disposed at the area between the inlet 11 and the outlet 12 of the hopper 10. For example, referring to FIG. 6, the filter plate 20 may be located at about 1/2 point of the total depth of the hopper 10. By the structure in which the filter plate 20 is disposed at the area between the inlet 11 and the outlet 12 of the hopper 10, it may be possible to prevent agglomeration of the active material in the hopper 10. Additionally, it may be possible to prevent additional agglomeration of the active material while the active material is discharged through the outlet 12 of the hopper 10 afterwards. In some cases, the filter plate 20 may include a plurality of filter plates at the area between the inlet 11 and the outlet 12 of the hopper 10. By this embodiment, it may be possible to further improve the prevention effect of active material agglomeration.

In another aspect of the present disclosure, the active material feeding device 1 may include a plate holder 25 to fix the filter plate 20 at a predetermined location. The plate holder 25 may be fixed to the hopper 10. For example, the side of the hopper 10 may decrease in diameter downwards, but may have a step structure including a specific area in which the diameter does not decrease and is constant, and a horizontally extended region toward the center of the hopper in the radial direction. In this instance, the plate holder 25 may be configured to be mounted on the step of the hopper. Accordingly, the plate holder 25 may be stably mounted on the hopper 10. Further, to improve the fixing strength, the plate holder 25 and the hopper 10 may be coupled by an additional coupling means. The coupling method is not limited to a particular one.

In an aspect of the present disclosure, the plate holder 25 may include an upper holder 251 disposed on the filter plate 20 and coupled to the hopper 10; and a lower holder 252 disposed below the filter plate 20 and coupled to the hopper 10.

For example, referring to FIG. 7, the lower holder 252 may support the bottom of the filter plate 20. In this instance, a square bar may be applied to the bottom of the lower holder 252. By this structure, it may be possible to prevent the lower holder 252 and the filter plate 20 from escaping downwards. Meanwhile, the filter plate 20 may be mounted on the lower holder 252, and the upper holder 251 may be mounted on the filter plate 20. That is, the filter plate 20 may be fixed between the upper holder 251 and the lower holder 252.

The upper holder 251 may be configured to prevent the filter plate 20 from escaping upwards. For example, because vibration of the vibrator 30 is transmitted to the filter plate 20, the upper holder 251 needs to fix the filter plate 20 to prevent the filter plate 20 from slipping away from the holder by the vibration. In this instance, the upper holder 251 and the lower holder 252 are preferably coupled to each other. That is, the upper holder 251 and the lower holder 252 may be fixed to each other, for example, by screw coupling, with the filter plate 20 interposed between them. However, the coupling method is not limited thereto.

In another aspect of the present disclosure, the upper holder 251 and the lower holder 252 may have an O-ring groove 253 recessed inward at the edge. In this instance, an O-ring R having elasticity may be inserted into the O-ring groove 253. The O-ring R may have, for example, a rim shape. The cross section of the O-ring R may be, for example, approximately semi-circular in shape as shown in FIG. 7. The shape of the cross section of the O-ring R may change depending on the shape of the O-ring groove 253. For example, the shape of the O-ring R in cross section may match the shape of the O-ring groove 253 in cross section. By this configuration, it may be possible to further enhance the coupling strength between the plate holder 25 and the hopper 10.

Meanwhile, the O-ring R may include, for example, silicone. Alternatively, the O-ring R may include rubber. That is the O-ring R may include an elastic material. Additionally, the O-ring R fixes the filter plate 20 at the predetermined location of the hopper 10 by a frictional force. Meanwhile, in an embodiment of the active material feeding device 1 of the present disclosure, a stopper may be applied to minimize the gap between the hopper 10 and the plate holder 25.

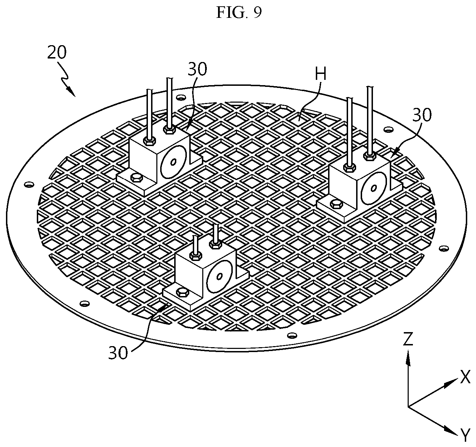

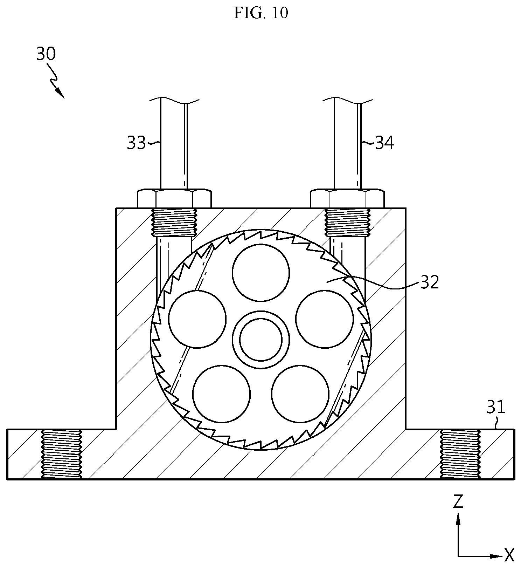

FIG. 8 is a diagram illustrating the vibrator 30 disposed on the filter plate 20 according to an embodiment of the present disclosure, and FIG. 9 is a diagram illustrating the vibrator 30 disclosure on the filter plate 20 according to another embodiment of the present. FIG. 10 is a diagram illustrating the vibrator 30 according to an embodiment of the present disclosure.

Referring to FIGs. 8 to 10, the vibrator 30 may be disposed at the inside area of the filter plate 20. That is, the vibrator 30 may be disposed in the space inside of the edge, not the edge area of the filter plate 20. Preferably, the vibrator 30 may be disposed at the central area of the filter plate 20. For example, referring to FIG. 8, the filter plate 20 may have an approximately circular plate shape. In this instance, the vibrator 30 may be mounted at the center of the filter plate 20.

By the structure in which the vibrator 30 is disposed at the inside area of the filter plate 20, not the edge area of the filter plate 20, vibration generated from the vibrator 30 may be uniformly transmitted to the filter plate 20. For example, the vibration intensity is highest at the location at which the vibrator 30 is disposed and decreases as it is further away from the vibrator 30, and when the vibrator 30 is disposed at an end of the filter plate 20, the vibration intensity is highest at the location at which the vibrator 30 is disposed and is lowest at the furthest location from the vibrator 30, resulting in non-uniform vibration intensity at the edge area of the filter plate 20. In contrast, when the vibrator 30 is disposed at the central area of the filter plate 20, the vibration intensity is highest at the central area of the filter plate 20 and decreases as it goes further in the radial direction, and vibration occurs at the same intensity over the entire edge of the filter plate 20. Meanwhile, when active material powder is fed into the hopper 10, the largest amount of active material particles generally gather at the central area, so it is necessary to generate vibration of highest intensity at the central area. On the contrary, a smaller amount of active material particles gather at the edge area, so vibration of lower intensity may be sufficient to break active material agglomerates. Accordingly, by the present disclosure, it may be possible to prevent active material agglomeration and break active material agglomerates most efficiently.

As another embodiment of the present disclosure, referring to FIG. 9, the vibrator 30 may include a plurality of vibrators in the inside area of the filter plate 20. In this case, the mounting location of the vibrator 30 may be set to generate vibration of uniform intensity over the entire filter plate 20. For example, referring to FIG. 9, the vibrators 30 may be arranged at an interval of 120° in the inside area of the filter plate 20. By this configuration, it may be possible to generate vibration of uniform intensity over the entire area of the filter plate 20.

In another aspect of the present disclosure, the vibrator 30 may be coupled to the filter plate 20, for example, by welding. Alternatively, the vibrator 30 may be coupled to the filter plate 20 by bolting. However, the coupling method of the vibrator 30 and the filter plate 20 is not limited thereto.

In an aspect of the present disclosure, the vibrator 30 may be a machine that generates vibration. The vibrator 30 of the present disclosure may be, for example, an air turbine vibrator 30. That is, the vibrator 30 may generate vibration by rotating a rotary turbine gear in the machine by using compressed air.

Referring to FIG. 11, the vibrator 30 may include a support portion 31, a body portion 32, an inlet port 33 and an outlet port 34.

The support portion 31 may support the vibrator 30, and the vibrator 30 may be fixed to the filter plate 20 through the support portion 31. The support portion 31 may be coupled to the filter plate 20, for example, by welding. Alternatively, the support portion 31 may be coupled to the filter plate 20 by bolting. However, the coupling method is not limited thereto and the vibrator 30 may be coupled to the filter plate 20 by a variety of coupling methods.

The body portion 32 may include the rotary turbine gear included in the vibrator 30. The rotary turbine gear may be rotated by the compressed air. A vibrational force may be generated by the rotation of the rotary turbine gear, and accordingly, the vibration may be transmitted to the filter plate 20 connected through the support portion 31 of the vibrator 30.

The compressed air may enter the body portion 32 of the vibrator 30 through the inlet port 33 of the vibrator 30. The compressed air may exit through the outlet port 34 by the rotation of the rotary turbine gear of the body portion 32. The inlet port 33 and the outlet port 34 may be disposed at the upper area of the vibrator 30. The inlet port 33 and the outlet port 34 may be connected to a hose that may move a fluid. A flow of fluid may be provided through the hose.

By this structure, it may be possible to reduce the size of the vibrator 30, simplify the structure and make it easy to install. Additionally, it may be possible to apply a low noise structure. Furthermore, the vibration output may be adjusted by adjusting the air pressure. That is, by the above-described configuration, the intensity of feeding the active material may be adjusted by adjusting the air pressure intensity. Additionally, by the above-described configuration, there is no gas explosion risk due to the use of air. Furthermore, by the vibrator 30 structure of the present disclosure, the vibrator 30 may have semi-permanent lifespan. However, the type of the vibrator 30 of the present disclosure is not limited thereto, and the vibrator 30 of the present disclosure may include any device that performs the vibration function.

Referring back to FIG. 1, the support 40 may be configured to support the active material feeding device 1. For example, the support 40 may include a plurality of supports on the perimeter of the active material feeding device 1. For example, the support 40 may include at least three supports on the outer perimeter of the active material feeding device 1. The shape of the support 40 is not limited to a particular one, and may include, for example, a cylindrical shape or a quadrangular prism shape.

By the above-described configuration of the present disclosure, the present disclosure may reduce the time taken to feed the active material through the installation of the vibrator 30. Through the following experiment, it can be seen that with the perforated structure of the filter plate 20 and the vibrator 30 of the present disclosure, it may be possible to prevent agglomeration of the active material and break active material agglomerates very well.

For example, when 500kg of specific active material is fed into the conventional active material feeding device, the time taken to feed was about 240 min, but when feeding into the active material feeding device 1 according to an embodiment of the present disclosure, the time taken to feed was reduced to about 170 min or less. That is, according to the present disclosure, the time taken to feed the single-crystal positive electrode active material was reduced by about 30% or more, compared to the conventional art. In particular, by the active material feeding device 1 of the present disclosure, when feeding 20kg of the specific active material, the feeding was completed within 2 min.

In another experiment, the conventional active material feeding device needed to use a physical method to feed the active material due to arching or bridging of the active material, and fed the active material little by little. For example, on the basis of active material OT-H4S 750KG, it took about 105 minutes to completely feed the active material. In contrast, as a result of the experiment of feeding the active material using the active material feeding device 1 of the present disclosure, a delay in feeding the active material within the filter plate 20 did not occur, and because the intensity of feeding the active material can be adjusted according to the pneumatic pressure intensity, it was confirmed that on the basis of OT-H4S 750KG, it took about 80 minutes to completely feed the active material. That is, it was confirmed that by the present disclosure, for example, on the basis of OT-H4S 750KG, the time taken to feed the active material was reduced from about 105 minutes to about 80 minutes, i.e., by about 30%. Accordingly, it was confirmed that it was possible to effectively feed the single-crystal positive electrode active material through the application of the vibrator 30 in the filter plate 20, and adjust the intensity of feeding the active material according to the pneumatic pressure intensity. Additionally, by the present disclosure, as it is more effective in feeding the single-crystal positive electrode active material, it may be possible to ensure the LOB margin.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

### [List of reference numerals]

1: Active material feeding device
10: Hopper
11: Inlet
12: Outlet
20: Filter plate
H: Through-hole
23: Handle
25: Plate holder
251: Upper holder
252: Lower holder
253: O-ring groove
R: O-ring
30: Vibrator
31: Support portion
32: Body portion
33: Inlet port
34: Outlet port
40: Support

## Claims

1. An active material feeding device comprising:
a hopper configured to accommodate and transfer an active material;
a filter plate disposed inside of the hopper and having at least one through-hole; and
a vibrator disposed on at least part of the filter plate and configured to vibrate the filter plate.

2. The active material feeding device according to claim 1, wherein the hopper has an inclined surface and decreases in width downwards.

3. The active material feeding device according to claim 1, wherein a cross section of the hopper is circular in shape.

4. The active material feeding device according to claim 1, wherein the through-hole is a perforated hole.

5. The active material feeding device according to claim 1, wherein the through-hole includes a plurality of through-holes.

6. The active material feeding device according to claim 1, wherein the through-hole is circular or quadrilateral in shape.

7. The active material feeding device according to claim 1, wherein the filter plate extends in a direction perpendicular to a depth direction of the hopper.

8. The active material feeding device according to claim 1, wherein the filter plate is located at a 1/2 point of a total depth of the hopper.

9. The active material feeding device according to claim 1, wherein the active material feeding device includes a plate holder to fix the filter plate at a predetermined location.

10. The active material feeding device according to claim 9, wherein the plate holder includes:
an upper holder disposed on the filter plate and coupled to the hopper; and
a lower holder disposed below the filter plate and coupled to the hopper.

11. The active material feeding device according to claim 10, wherein the filter plate is fixed between the upper holder and the lower holder.

12. The active material feeding device according to claim 10, wherein the upper holder and the lower holder have an O-ring groove that is recessed inward at an edge, and an O-ring having elasticity is inserted into the O-ring groove.

13. The active material feeding device according to claim 1, wherein the vibrator is disposed at a central area of the filter plate.

14. The active material feeding device according to claim 1, wherein the vibrator is coupled to the filter plate by welding.

15. The active material feeding device according to claim 1, wherein the vibrator is configured to rotate a rotary turbine gear in the vibrator by using compressed air.
